# EUROPÄISCHE PATENTANMELDUNG

(11) **EP 1 177 943 A2**
(43) Veröffentlichungstag der Anmeldung: **06.02.2002**
(21) Anmeldenummer: 01117806.8
(22) Anmeldetag: 21.07.2001
(51) Int. Cl.: B60Q 3/02

(54) **Fahrzeugdach, insbesondere Kraftfahrzeugdach**

(30) Priorität: 04.08.2000 DE 10038205
(71) Anmelder: ArvinMeritor GmbH, 63128 Dietzenbach (DE)
(72) Erfinder: Grimm, Rainer, 60599 Frankfurt (DE)
(74) Vertreter: Oppermann, Mark, Dipl.-Ing.

(57) **Zusammenfassung**

Es wird ein Fahrzeugdachmodul mit integriertem Beleuchtungssystem für die Innenraumbeleuchtung vorgeschlagen. Das aus einer Mehrzahl von lichtleitenden Stäben (13), vorzugsweise aus Glas, und einer Lichtquelle (14) bestehende Beleuchtungssystem ist in die aus Schaumkunststoff geformte, den Dachhimmel bildende Innenschale (1) des Dachmoduls so eingeschäumt, daß lediglich die lichtemittierenden Enden (17) der lichtleitenden Stäbe (13) mit ihren Lichtaustrittsflächen (18) in der sichtbaren Oberfläche des Dachhimmels angeordnet sind. Durch entsprechende Wahl der Anzahl der lichtleitenden Stäbe (13) und das Verteilungsmuster der zugehörigen Lichtaustrittsflächen (18) können sowohl eine gleichmäßige Innenraumbeleuchtung als auch besondere Beleuchtungseffekte erzielt werden.

## Beschreibung

Die Erfindung bezieht sich auf ein Fahrzeugdach, insbesondere Kraftfahrzeugdach, entsprechend dem Oberbegriff des Patentanspruchs 1.

Derartige modulartig einbaufertig vorgefertigte Fahrzeugdächer werden getrennt von der Fahrzeugkarosserie fertiggestellt und erst am Montageband in der Automobilfabrik mit der Fahrzeugkarosserie vereinigt. Insbesondere wegen der erheblichen Verkürzung der Montagezeit am Montageband erfreuen sich solche Fahrzeugdachmodule zunehmender Bedeutung.

Bei einem bekannten Fahrzeugdach (DE 197 09 016 A1) ist zusätzlich zu der im Oberbegriff des Anspruchs 1 angegebenen Ausbildung die Innenschale im Bereich der zur Auflage auf den Karosserierahmen vorgesehenen Außenränder in zwei Schichten aufgeteilt, von denen die obere Schicht auf den Karosserierahmen auflegbar ist, während die untere Schicht nach unten umbiegbar und zur Verkleidung des Karosserierahmens ausgebildet ist. Dabei sind die nach unten umbiegbaren Bereiche der Innenschale an dafür geeigneten Orten mit mindestens einem vormontierten Element aus der aus Sonnenblenden, Haltegriffen, Lüftungsgittern, Innenleuchten, stoßabsorbierenden Sicherheitselementen, Airbags u.dgl. bestehenden Gruppe bzw. mit vorbereiteten Anbringungsorten für mindestens eines dieser Elemente versehen.

Üblicherweise sind bei Kraftfahrzeugen zur Innenbeleuchtung des Fahrgastraums Lampen am Dachhimmel und/oder dem oberen Karosserierahmen, den seitlichen Karosseriesäulen, gelegentlich auch an anderen Orten, wie dem Innenspiegelhalter, vorgesehen. Die bekannten Innenlampen für Kraftfahrzeuge sind daher nur an wenigen bestimmten Orten angebracht. Häufig sind bei Fahrzeugen mit Limousinenkarosserien nur eine Lampe mittig in Nähe der Windschutzscheibe und eine weitere Lampe mittig oberhalb der Rücksitze vorgesehen. Trotz Anbringung von Streuscheiben an den wenigen Innenleuchten können diese den Fahrzeuginnenraum nicht gleichmäßig ausleuchten, es werden vielmehr deutlich abgegrenzte Lichtinseln gebildet.

Der vorliegenden Erfindung liegt die Aufgabe zugrunde, ein modulartig vorgefertigtes Fahrzeugdach der eingangs angegebenen Ausbildung mit einem integrierten Beleuchtungssystem für den Fahrzeuginnenraum für dessen möglichst gleichmäßige und/oder zielgerichtete Ausleuchtung zu versehen.

Diese Aufgabe wird erfindungsgemäß durch die Merkmale des Anspruchs 1 gelöst. Vorteilhafte oder zweckmäßige Weiterbildungen gehen aus den Unteransprüchen hervor und sind nachfolgend ebenfalls näher erläutert.

Das mit der Erfindung vorgeschlagene Beleuchtungssystem sieht vor, daß in die Innenschale mehrere lichtleitende Stäbe, vorzugsweise aus Glas, eingeschäumt sind, die mit einer Lichtquelle verbunden sind, und deren lichtemittierende Enden dem Fahrzeuginnenraum zugekehrt und voneinander beabstandet in der sichtbaren Oberfläche des Dachhimmels angeordnet sind. Lichtleitende Glasstäbe können bekanntlich von beliebiger Formgebung und von beliebigem Querschnitt sein. Sie erlauben den Transport von Lichtenergie ohne nennenswerte Verluste durch innere Totalreflexion, die noch durch Verspiegelung der Grenzflächen erhöht werden kann. Der Lichtenergietransport kann bei entsprechender Wahl des Brechungskoeffizienten alle auf die Eintrittsfläche gelangenden gerichteten Strahlen erfassen und sie an den Austrittsflächen austreten lassen, auch wenn die Formgebung der Glasstäbe erheblich von der geradlinigen Form abweicht. Es ist ersichtlich, daß die Erfindung eine Anpassung des Beleuchtungssystems an alle auftretenden Beleuchtungserfordernisse für Kraftfahrzeuginnenräume ermöglicht, wobei das komplette System bereits unauffälliger Bestandteil des Fahrzeugdachmoduls ist. Die in die sichtbare Oberfläche des Dachhimmels integrierten lichtemittierenden Enden bzw. Austrittsflächen der Glasstäbe sind unauffällig und treten daher nicht störend in Erscheinung. Die Anbringung zusätzlicher Lampen ist nicht erforderlich.

Im Verfolg des Erfindungsgedankens kann entsprechend Anspruch 2 für alle eingeschäumten lichtleitenden Glasstäbe eine gemeinsame Lichtquelle vorgesehen sein, wodurch das Beleuchtungssystem einen sehr einfachen Aufbau erhält.

Gemäß Anspruch 3 kann auch die Lichtquelle in die Innenschale eingeschäumt sein, so daß das Beleuchtungssystem insgesamt mit Ausnahme der Lichtaustrittsflächen der Glasstäbe am Innenhimmel nicht sichtbar ist.

Zur Erzielung einer weitgehend gleichmäßigen Beleuchtung des Innenraums können die lichtemittierenden Enden der Glasstäbe, d.h. die Lichtaustrittsflächen der Glasstäbe, in regelmäßiger Verteilung in der sichtbaren Oberfläche der Innenschale angeordnet sein, wie das aus Anspruch 4 hervorgeht. In einer in Fig. 5 angegebenen bevorzugten Ausführungsform können die lichtemittierenden Enden der Glasstäbe in Reihen angeordnet sein.

Das erfindungsgemäße Beleuchtungssystem eröffnet gemäß Anspruch 6 die vorteilhafte Möglichkeit, daß die lichtleitenden Glasstäbe im wesentlichen Abschnitt ihrer jeweiligen Länge der Dachwölbung angepaßt und mit etwa gleichen und etwa gleichbleibenden Abständen zur sichtbaren Oberfläche der Innenschale eingeschäumt sind. Auf diese Weise bildet das Beleuchtungssystem praktisch eine weitere Schicht im sandwichartigen Aufbau des Fahrzeugdachs.

Zweckmäßig sind die lichtleitenden Glasstäbe in Parallellage zueinander mit der Lichtquelle verbunden und in Parallellage bis zur jeweiligen Abbiegungsstelle geführt, wie im Anspruch 7 angegeben ist. Durch diese Maßnahmen erhält das Beleuchtungssystem einen übersichtlichen, fertigungstechnisch einfachen Aufbau.

Weitere Einzelheiten der Erfindung werden nachfolgend anhand der ein Ausführungsbeispiel darstellenden Zeichnungen näher erläutert. Darin zeigt:
- Fig. 1: in aufgebrochener Darstellungsweise die schematisierte Innenansicht des Fahrzeugdachmoduls und
- Fig. 2: den abgebrochenen Schnitt durch das Fahrzeugdachmodul entsprechend der Schnittverlaufslinie II-II in Fig. 1.

In den Zeichnungen ist die Erfindung an einem Ausführungsbeispiel eines Moduldachs entsprechend der DE 197 09 016 A1 dargestellt, sie ist aber für alle Dachmodule mit geschäumter Innenschale gleichermaßen anwendbar, unabhängig davon, wie die Innenschale in ihren zur Auflage auf den Karosserierahmen bestimmten Außenrandbereichen ausgebildet ist.

Die Innenschale 1 des Dachmoduls ist aus einem Schaumkunststoff gebildet, der auf eine starre Dachhaut 2 aufgeschäumt ist. Die starre Dachhaut 2 besteht aus einem tiefgezogenen Metallblech, beispielsweise Aluminiumblech, oder kann aus einer vakuumverformten Kunststoffolie gebildet sein. Die Erfindung ist aber auch bei Dachmodulausführungsformen anwendbar, bei denen keine feste Dachhaut vorgesehen ist. Hierbei besteht das Dachmodul im wesentlichen aus einem harten schalenförmig und eigensteif geformten Schaumkunststoff mit glatter lackierbarer bzw. lackierter Außenfläche.

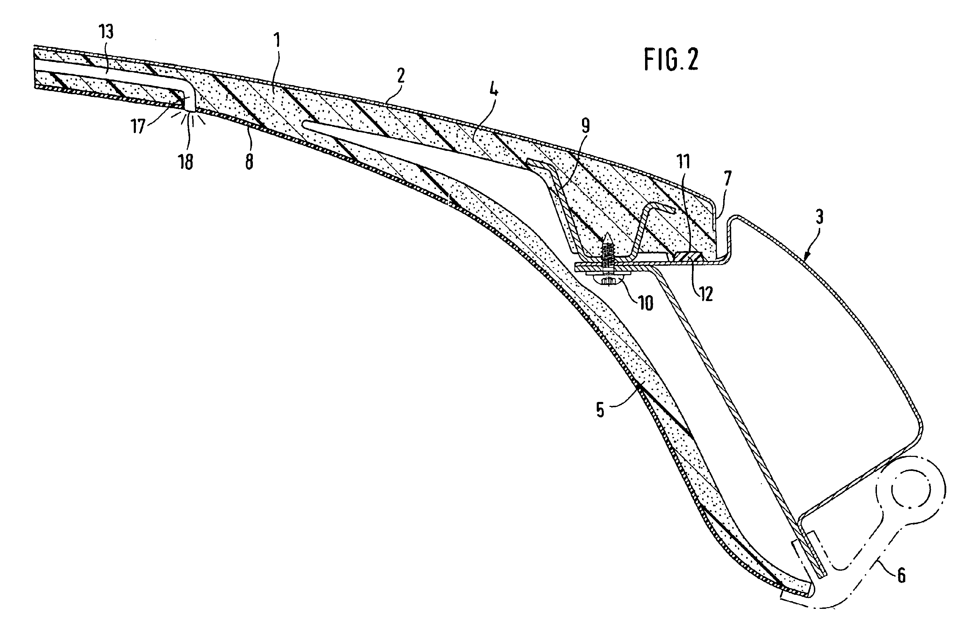

Die Innenschale ist im Bereich der zur Auflage auf den Karosserierahmen 3 vorgesehenen Außenränder in zwei Schichten aufgeteilt, von denen die obere Schicht 4 auf den Karosserierahmen 3 aufgelegt ist, während die untere Schicht 5 über die Außenränder des Fahrzeugdachs übersteht und für den Durchtritt durch die von dem Karosserierahmen 3 begrenzte Karosserieöffnung nach unten ohne bleibende Deformationen umbiegbar ist. Die untere Schicht 5 ist zur Anlage an den Karosserierahmen und zur Befestigung daran, beispielsweise über an den Karosserierahmen 3 anzuschraubende Funktionselemente (nicht dargestellt), ausgebildet. Die Verbindung zwischen der unteren Schicht 5 und dem Karosserierahmen 3 kann ein in Fig. 2 in strichpunktierten Linien schematisch dargestellter und aus einem elastomeren Werkstoff profiliert geformter Verbindungskeder 6 übernehmen, der zugleich einen Hohlkammerabschnitt zur Abdichtung der benachbarten Fahrzeugtür (nicht dargestellt) gegenüber dem Karosserierahmen 3 aufweisen kann.

Geeignete Werkstoffe für die Innenschale sind Hartschaumkunststoffe auf PUR-Basis, die durch dem Kunststoff vor dem Aufschäumen einverleibte Faserstoffe, beispielsweise Glasfaserabschnitte, armiert sein können. Aber auch in die Schäumform eingelegte Gewebe, Gewirke, Vliese u.dgl. sind als Armierung geeignet. Durch das Aufschäumen der armierten Innenschale 1, deren obere Schicht 4 bis zu einer Randabkantung 7 der Dachhaut 2 reicht, entsteht ein sandwichartiges Verbunddachmodul hoher Formbeständigkeit und Festigkeit. Alle Innenkonturen der Innenschale 1 einschließlich der unteren Schicht 5 werden durch entsprechende Formgebung der Schäumform (nicht dargestellt) gebildet.

Die Innenfläche der Innenschale 1 kann zur Ausbildung einer Dachhimmeloberfläche mit einem textilen oder folienartigen Bezugsmaterial 8 beschichtet sein. In die obere Schicht 4 kann ein Verstärkungsteil 9 in Form eines durchgehenden Profils in den Schaumstoff eingebettet sein. Dieses Verstärkungsteil 9 dient zur Befestigung des Dachmoduls an dem Karosserierahmen 3 mittels Schrauben 10. Im übrigen ist die im Bereich der Auflage auf den Karosserierahmen 3 verdickte obere Schicht 4 mit einer umlaufend eingeformten Aufnahmenut 11 versehen, in welche eine das Dachmodul gegenüber dem Karosserierahmen 3 abdichtende und zusätzlich daran befestigende Kleberraupe 12 Aufnahme findet.

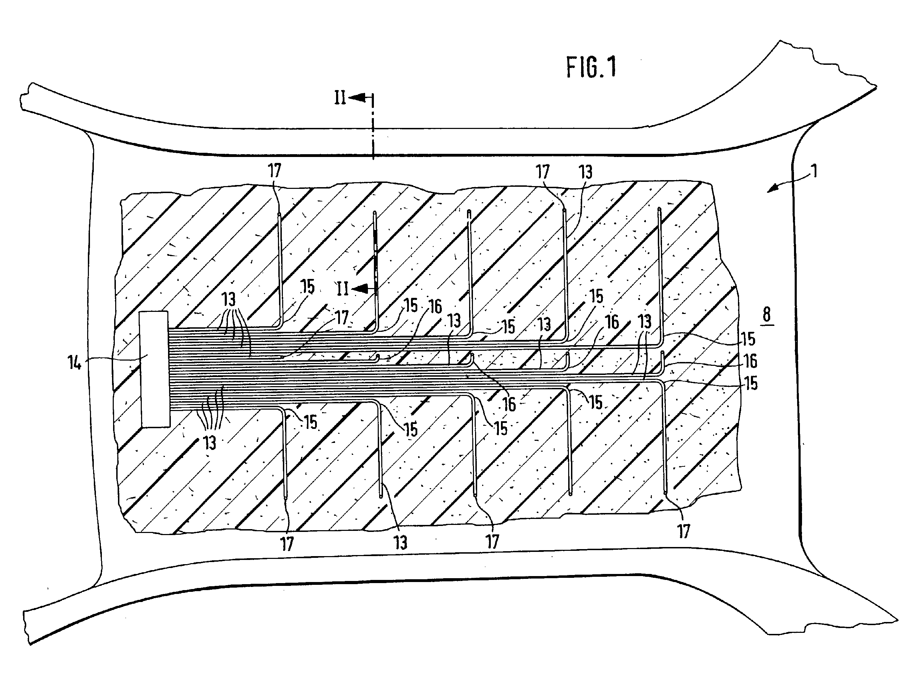

Das Ausführungsbeispiel entsprechend Fig. 1 zeigt fünfzehn lichtleitende Glasstäbe oder -drähte 13, die sämtlich von einer gemeinsamen Lichtquelle 14 zunächst in Parallellage zueinander ausgehen. In regelmäßigen Abständen sind auf jeder Seite fünf Glasstäbe 13 an Abbiegungsstellen 15 nach außen abgebogen. Die zwischen den beiden äußeren jeweils fünf Glasstäbe 13 umfassenden Gruppen verbleibenden fünf inneren Glasstäbe 13 sind in Querfluchtung mit den Abbiegungsstellen 15 ebenfalls an Abbiegungsstellen 16 nach einer Seite hin abgebogen, wobei allerdings der kürzeste dieser Glasstäbe nicht zur Seite hin abgebogen ist, sondern mit seinem lichtemittierenden Ende 17 unmittelbar zum Fahrzeuginnenraum hin gerichtet ist. Die fünfzehn Glasstäbe 13 sind von unterschiedlicher Länge und verbleiben jeweils bis zur jeweiligen Abbiegungsstelle 15 bzw. 16 zu den übrigen Glasstäben 13 in Parallellage.

Wie Fig. 1 weiterhin verdeutlicht, sind die Längen der einzelnen Glasstäbe 13 so bemessen, daß die lichtemittierenden Enden 17 aller Glasstäbe drei parallele Reihen von je fünf lichtemittierenden Enden 17 in Dachlängsrichtung bilden. Außerdem befinden sich jeweils drei der lichtemittierenden Enden 17 in fünf parallelen Reihen in Dachquerrichtung. Auf diese Weise wird eine regelmäßige Verteilung der lichtemittierenden Enden 17 der Glasstäbe 13 in der von dem Bezugsmaterial 8 gebildeten Oberfläche der Innenschale 1 erzielt. Selbstverständlich sind im Rahmen der Erfindung auch eine größere oder geringere Anzahl von Lichtstäben ebenso möglich wie andere Verteilungsmuster ihrer lichtemittierenden Enden.

In Fig. 2 ist ein einzelner Glasstab 13 mit einem Teilbereich seiner Länge zwischen einer Abbiegungsstelle 15 und seinem lichtemittierenden Ende 17 dargestellt. Es ist auch zu erkennen, daß sich die Lichtaustrittsfläche 18 des lichtemittierenden Endes 17 etwa in der Ebene der sichtbaren Oberfläche des Bezugsmaterials 8 der Innenschale 1 befindet. Schließlich läßt sich aus Fig. 2 jedenfalls für den dargestellten Bereich des Glasstabes 13 entnehmen, daß der Glasstab 13 der Dachwölbung in Querrichtung angepaßt ist. Eine entsprechende Wölbungsanpassung sowohl an die Querwölbung als auch an die Längswölbung des Fahrzeugdachs wird für alle vorhandenen Glasstäbe 13 vorgenommen. Die Glasstäbe 13 werden zum Einschäumen so in die Schäumform eingelegt, daß sie im fertigen Dachmodul sowohl zur Dachhaut 2 als auch zum Bezugsmaterial 8 etwa gleiche und über ihren Längenverlauf gleichbleibende Abstände aufweisen.

Bei der Montage des Fahrzeugdachmoduls wird die Lichtquelle 14 in geeigneter Weise (nicht dargestellt) an das elektrische Bordnetz des Kraftfahrzeugs unter Zwischenschaltung eines Ein/Aus-Schalters und gewünschtenfalls eines Dimmers angeschlossen. Selbstverständlich kann die elektrische Zuleitung zu der Lichtquelle 14 ebenfalls in die Innenschale 1 eingeschäumt werden, so daß sie nicht sichtbar ist.

Es wird ein Fahrzeugdachmodul mit integriertem Beleuchtungssystem für die Innenraumbeleuchtung vorgeschlagen. Das aus einer Mehrzahl von lichtleitenden Stäben, vorzugsweise aus Glas, und einer Lichtquelle bestehende Beleuchtungssystem ist in die aus Schaumkunststoff geformte, den Dachhimmel bildende Innenschale des Dachmoduls so eingeschäumt, daß lediglich die lichtemittierenden Enden der lichtleitenden Stäbe mit ihren Lichtaustrittsflächen in der sichtbaren Oberfläche des Dachhimmels angeordnet sind. Durch entsprechende Wahl der Anzahl der lichtleitenden Stäbe und das Verteilungsmuster der zugehörigen Lichtaustrittsflächen können sowohl eine gleichmäßige Innenraumbeleuchtung als auch besondere Beleuchtungseffekte erzielt werden.

## Patentansprüche

1. Fahrzeugdach, insbesondere Kraftfahrzeugdach, das sandwichartig und an seiner aus Schaumkunststoff geformten Innenschale (1) als Dachhimmel ausgebildet, getrennt von der Fahrzeugkarosserie hergestellt, mit seinen Außenrändern auf einen Karosserierahmen (3) auflegbar und mit diesem fest verbindbar ist, **dadurch gekennzeichnet, daß** in die Innenschale (1) mehrere lichtleitende Stäbe (13), vorzugsweise aus Glas, eingeschäumt sind, die mit einer Lichtquelle (14) verbunden sind, und deren lichtemittierenden Enden (17) dem Fahrzeuginnenraum zugekehrt und voneinander beabstandet in der sichtbaren Oberfläche des Dachhimmels angeordnet sind.

2. Fahrzeugdach nach Anspruch 1, **dadurch gekennzeichnet, daß** für alle eingeschäumten lichtleitenden Glasstäbe (13) eine gemeinsame Lichtquelle (14) vorgesehen ist.

3. Fahrzeugdach nach Anspruch 2, **dadurch gekennzeichnet, daß** auch die Lichtquelle (14) in die Innenschale (1) eingeschäumt ist.

4. Fahrzeugdach nach einem der vorstehenden Ansprüche, **dadurch gekennzeichnet, daß** die lichtemittierenden Enden (17) der Glasstäbe (13) in regelmäßiger Verteilung in der sichtbaren Oberfläche der Innenschale (1) angeordnet sind.

5. Fahrzeugdach nach einem der vorstehenden Ansprüche, **dadurch gekennzeichnet, daß** die lichtemittierenden Enden (17) der Glasstäbe (13) in Reihen angeordnet sind.

6. Fahrzeugdach nach einem der vorstehenden Ansprüche, **dadurch gekennzeichnet, daß** die lichtleitenden Glasstäbe (13) im wesentlichen Abschnitt ihrer jeweiligen Länge der Dachwölbung angepaßt und mit etwa gleichen und etwa gleichbleibenden Abständen zur sichtbaren Oberfläche der Innenschale (1) eingeschäumt sind.

7. Fahrzeugdach nach einem der vorstehenden Ansprüche, **dadurch gekennzeichnet, daß** die lichtleitenden Glasstäbe (13) in Parallellage zueinander mit der Lichtquelle (14) verbunden und in Parallellage bis zur jeweiligen Abbiegungsstelle (15, 16) geführt sind.
